# EUROPEAN PATENT APPLICATION

(11) **EP 2 657 580 A1**
(43) Date of publication of application: **30.10.2013**
(21) Application number: 11851795.2
(22) Date of filing: 28.11.2011
(51) Int. Cl.: F16J 15/12, F16L 21/02

(54) **CYLINDRICAL GASKET, METHOD FOR MANUFACTURING SAME, AND INSERTION-TYPE EXHAUST PIPE JOINT USING THE CYLINDRICAL GASKET**

(30) Priority: 21.12.2010 JP 2010285199
(71) Applicant: Oiles Corporation, Tokyo 108-0075 (JP)
(72) Inventor: SHIONOYA, Shin-ichi, Fujisawa-shi, Kanagawa 252-0811 (JP); TAKASAGO, Toshikazu, Nakatsu-shi, Oita 879-0105 (JP)
(74) Representative: Jackson, Martin Peter
(86) International application number: PCT/JP2011/006596
(87) International publication number: WO 2012/086130

(57) **Abstract**

In a cylindrical gasket 23, a heat-resistant material 1 made from expanded graphite and a reinforcing member 2 made from a metal wire net are provided with structural integrity by being compressed and intertwined with each other. A cylindrical inner peripheral surface 19, a cylindrical outer peripheral surface 20, and axial annular end faces 21 and 22 which are exposed on the cylindrical gasket 23 are each formed by a surface where a surface constituted of the heat-resistant material 1 and a surface constituted of the reinforcing member 2 are present in mixed form, and in the cylindrical gasket 23, the density of the heat-resistant material 1 is in the range of 1.21 to 1.58 Mg/m³, and the mass of the reinforcing member 2 occupies 50 to 80% of the total mass of the cylindrical gasket 23.

## Description

### TECHNICAL FIELD

The present invention relates to a cylindrical gasket which is suitably used for an insertion-type exhaust pipe joint used in a motor vehicle such as an ATV (All Terrain Vehicle: a four-wheeled buggy), a snowmobile, and a two-wheeled vehicle, a method of manufacturing the same, and an insertion-type exhaust pipe joint using the cylindrical gasket.

### BACKGROUND ART

An insertion-type exhaust pipe joint includes an inner pipe and an outer pipe having an inside diameter substantially identical to the outside diameter of this inner pipe, wherein the outer pipe has an enlarged-diameter end portion at its pipe end portion, and the inner pipe has a pipe end portion which is passed through the enlarged-diameter portion of the outer pipe and is fitted at its one end portion to the pipe end portion of the outer pipe, and wherein a gasket is fitted in an annular gap between the pipe end portion of the inner pipe and the enlarged-diameter portion of the outer pipe so as to seal the gap between the inner and outer pipes by a tightening band which is disposed on the outer peripheral surface of the outer pipe (refer to Patent Document 1, Patent Document 2, and Patent Document 3).

Further, as a gasket which is used for the above-described exhaust pipe joint, a gasket has been proposed wherein a strip is formed by cutting an expanded graphite sheet into a fixed width and length, a metal wire net cut to a length substantially identical to the length of the expanded graphite sheet is superposed on this strip, this superposed assembly is convoluted around a cylindrical core with the metal wire net placed on the inner side to fabricate a hollow cylindrical member, and this hollow cylindrical member is inserted in a die and is subjected to compression forming in its axial direction, whereby the metal wire net or the expanded graphite is exposed on its inner peripheral surface, and its opposite end faces and its outer peripheral surface are covered by the expanded graphite (refer to Patent Document 1 and Patent Document 3).

In addition, there has also been proposed an annular gasket wherein a gasket main body is provided by enclosing overall surfaces of an expanded graphite sheet by a metallic net, and the gasket main body is curved into a an annular shape and is compressed by a press machine such that the expanded graphite and the net are integrally secured to each other (refer to Patent Document 4).

In the expanded graphite which is used in the gasket proposed in the above-described Patent Documents 1 to 3, its characteristics such as heat resistance, chemical resistance, and low-friction property are substantially equivalent to those of normal graphite; however, such expanded graphite can be easily formed into a thin sheet or a block by being subjected to pressurization without using a binder, and an object thus obtained has a characteristic of being pliable and flexible unlike the aforementioned graphite.

Accordingly, the gasket, which is formed of expanded graphite and a metal wire net and is disposed between the inner pipe and an enlarged-diameter portion of the outer pipe of the exhaust pipe joint, undergoes expansion in volume due to the heat of exhaust gases flowing through the inner pipe and has pliability and flexibility, so that the gasket is capable of adapting itself well and fits to the gap between the inner pipe and the outer pipe, thereby making it possible to improve the sealability between the inner pipe and the outer pipe (refer to Patent Document 1).

### PRIOR ART DOCUMENTS

### PATENT DOCUMENTS

Patent Document 1: JP-A-61-244815
Patent Document 2: JP-UM-B-6-36273
Patent Document 3: JP-A-6-146875
Patent Document 4: JP-UM-A-5-47620

### SUMMARY OF THE INVENTION

### PROBLEMS TO BE SOLVED BY THE INVENTION

In recent years, however, the exhaust pipe had become large in size as a countermeasure for noise, and a catalytic converter has come to be mounted on the exhaust pipe as an emission control measure, so that an excessively large load has come to be applied to the insertion-type exhaust pipe joint. Due to traveling on a rough road, in particular, the joint is repeatedly subjected to vibrational load and bending torque, and prying repeatedly occurs between the inner and outer pipes.

With respect to the vibrational load, bending torque, and prying which repeatedly occur, the gasket is required to have pliability needed to exhibit sealability as well as rigidity for receiving a tightening force without the occurrence of a permanent set at the time of tightening with a tightening band. With respect to these two conflicting performances, the above-described conventional gaskets are respectively specialized in either one of the performances of pliability and rigidity, and it is difficult to render both performances compatible. As a result, in the case of a gasket which is specialized in rigidity, a problem occurs in sealability, while, in the case of a gasket which is specialized in pliability, a problem can possibly occur in that sealability of the gap between the inner and outer pipes is caused to decline due to such as the loosening of the tightening band etc. caused by such as the permanent set of the gasket etc.

The present invention has been devised in view of the above-described aspects, and its object is to provide a cylindrical gasket which is suitably used for an insertion-type exhaust pipe joint and which has both pliability contributing to sealability and rigidity for receiving the tightening force exerted by the tightening band, as well as a method of manufacturing the same, and an insertion-type exhaust pipe joint using the cylindrical gasket.

### MEANS FOR OVERCOMING THE PROBLEMS

A cylindrical gasket for use in an insertion-type exhaust pipe joint in accordance with the present invention comprises: a reinforcing member made from a metal wire net and compressed and a heat-resistant material made from expanded graphite compressed and filling meshes of the metal wire net of the reinforcing member, wherein the reinforcing member and the heat-resistant material are intertwined with each other so as to be provided with structural integrity, the density of the heat-resistant material is in a range of 1.21 to 1.58 Mg/m³, and the mass of the reinforcing member occupies 50 to 80% of a total mass.

According to the present invention, since the reinforcing member made from the metal wire net and compressed occupies 50 to 80% of the total mass, the tightening force exerted by the tightening band and the load applied by vibrations can be received mainly by the reinforcing member made of the metal wire net, with the result that a permanent set is unlikely to occur. In addition, since the density of the heat-resistant material is in the range of 1.21 to 1.58 Mg/m³, it is possible to sufficiently obtain the pliability required for sealability. Therefore, it is possible to provide a cylindrical gasket which is suitably used for an insertion-type exhaust pipe joint and which has the two conflicting performances of pliability and rigidity.

A first method of manufacturing a cylindrical gasket in accordance with the present invention, which is suitably used for an insertion-type exhaust pipe joint and includes the reinforcing member made from the metal wire net and compressed and the heat-resistant material made from the expanded graphite compressed and filling meshes of the metal wire net of the reinforcing member, the reinforcing member and the heat-resistant material being intertwined with each other so as to be provided with structural integrity, an inner peripheral surface, an outer peripheral surface, and both end faces being each formed by a surface constituted of the heat-resistant material, the density of the heat-resistant material being in a range of 1.21 to 1.58 Mg/m³, and the mass of the reinforcing member occupying 50 to 80% of a total mass, comprises the steps of: (1) preparing a heat-resistant material constituted by an expanded graphite sheet having a density of 1.0 to 1.15 Mg/m³ and a thickness of 0.3 to 0.6 mm; (2) preparing a reinforcing member made from a metal wire net which is obtained by weaving or knitting a fine metal wire, and fabricating a superposed assembly in which the heat-resistant material and the reinforcing member are superposed on each other such that one lengthwise end of the reinforcing member and a lengthwise end of the heat-resistant material corresponding to that one end are aligned; (3) convoluting the superposed assembly around an outer peripheral surface of a cylindrical core with the heat-resistant material placed on an inner side such that the heat-resistant material is convoluted with one more turn, to thereby form a tubular base member in which the heat-resistant material is exposed on both an inner peripheral side and an outer peripheral side; and (4) inserting the tubular base member into a cylindrical hollow portion of a die, and subjecting the tubular base member to compression forming in the die in an axial direction thereof.

A second method of manufacturing a cylindrical gasket in accordance with the present invention, which is suitably used for an insertion-type exhaust pipe joint and includes the reinforcing member made from the metal wire net and compressed and the heat-resistant material made from the expanded graphite compressed and filling meshes of the metal wire net of the reinforcing member, the reinforcing member and the heat-resistant material being intertwined with each other so as to be provided with structural integrity, an inner peripheral surface, an outer peripheral surface, and both end faces being each formed by a surface where a surface constituted of the heat-resistant material and a surface constituted of the reinforcing member are present in mixed form, the density of the heat-resistant material being in a range of 1.21 to 1.58 Mg/m³, and the mass of the reinforcing member occupying 50 to 80% of a total mass, comprises the steps of: (1) preparing a heat-resistant material constituted by an expanded graphite sheet having a density of 1.0 to 1.15 Mg/m³ and a thickness of 0.3 to 0.6 mm; (2) inserting the heat-resistant material between two layers of a reinforcing member made from a metal wire net which is obtained by weaving or knitting a fine metal wire, and feeding the reinforcing member having the inserted heat-resistant material between the two layers into a nip between a pair of rollers so as to be pressurized and to fill the heat-resistant material in meshes of the metal wire net of the reinforcing member, to thereby form a flattened composite sheet which has both surfaces where a surface constituted of the reinforcing member and a surface constituted of the heat-resistant material are exposed in mixed form and portions where the heat-resistant material is not filled on both widthwise sides of the reinforcing member; (3) convoluting the flattened composite sheet around a core with at least three turns to thereby form a tubular base member; and (4) inserting the tubular base member into a cylindrical hollow portion of a die, and subjecting the tubular base member to compression forming in the die in an axial direction thereof.

According to the first and second methods of manufacturing a cylindrical gasket in accordance with the present invention, since the cylindrical gasket is manufactured such that, in the relation between the density of the heat-resistant material made from the expanded graphite and the mass of the reinforcing member made from the metal wire net, the density of the heat-resistant material is in the range of 1.21 to 1.58 Mg/m³, and the mass of the reinforcing member occupies 50 to 80% of the total mass, it is possible to obtain a cylindrical gasket which has both pliability contributing to sealability and rigidity for receiving the tightening force exerted by the tightening band.

An insertion-type exhaust pipe joint in accordance with the present invention comprises: an outer pipe having a pipe end portion, an enlarged-diameter cylindrical portion having an enlarged diameter and provided to the pipe end portion via an annular shoulder portion, an open end portion provided at one axial end portion of the enlarged-diameter cylindrical portion, a flange portion provided on an outer peripheral surface of the open end portion in such a manner as to extend radially outwardly, and a plurality of slits provided in the enlarged-diameter cylindrical portion and in the flange portion in such a manner as to extend axially from an annular end face of the open end portion and to be arranged equidistantly in a circumferential direction; an inner pipe having a pipe end portion which is passed through an interior of the enlarged-diameter cylindrical portion of the outer pipe and is fitted at its one end portion to the pipe end portion of the outer pipe, and a flange which is provided uprightly on an cylindrical outer surface of another end portion of the pipe end portion; the above cylindrical gasket which is fitted in an annular gap between a cylindrical outer surface of the pipe end portion of the inner pipe and a cylindrical inner surface of the pipe end portion of the outer pipe; and a tightening band which is disposed on a cylindrical outer surface of the enlarged-diameter cylindrical portion of the outer pipe so as to press the cylindrical inner surface of the pipe end portion of the outer pipe against the cylindrical outer peripheral surface of the cylindrical gasket by being tightened, through which pressing the tightening band presses the cylindrical inner peripheral surface of the cylindrical gasket against the cylindrical outer surface of the pipe end portion of the inner pipe, the cylindrical gasket in the annular gap being disposed with an annular end face of its one axial end portion abutting against the flange of the inner pipe.

According to the insertion-type exhaust pipe joint in accordance with the present invention, since the density of the heat-resistant material is in the range of 1.21 to 1.58 Mg/m³ and the mass of the reinforcing member occupies 50 to 80% of the total mass, the cylindrical gasket, which is fitted in the annular gap between the outer peripheral surface of the pipe end portion of the inner pipe and the cylindrical inner surface of the enlarged-diameter cylindrical portion of the outer pipe, has both pliability contributing to sealability and rigidity for receiving the tightening force exerted by the tightening band. As a result, sealability of the gap between the inner pipe and the outer pipe is improved, thereby preventing leakage of exhaust gases from the gap as practically as possible.

### ADVANTAGES OF THE INVENTION

According to the present invention, since the density of the heat-resistant material made from expanded graphite is in the range of 1.21 to 1.58 Mg/m³ and the mass of the reinforcing member made from a metal wire net occupies 50 to 80% of the total mass, it is possible to provide a cylindrical gasket which has both pliability contributing to sealability and rigidity for receiving the tightening force exerted by the tightening band and a method of manufacturing the same, as well as an insertion-type exhaust pipe joint which, by incorporating the cylindrical gasket, is capable of improving sealability of the gap between the inner pipe and the outer pipe and of preventing leakage of exhaust gases from the gap as practically as possible.

### BRIEF DESCRIPTION OF THE DRAWINGS

Fig. 1 is a perspective view of a cylindrical gasket which is manufactured in one embodiment of the present invention;
Fig. 2 is a cross-sectional view taken in the direction of arrows along line II-II of Fig. 1;
Fig. 3 is a perspective view of a heat-resistant material constituted by an expanded graphite sheet in the process of manufacturing the cylindrical gasket in accordance with the present invention;
Fig. 4 is a diagram explaining a method of forming a reinforcing member in the process of manufacturing the cylindrical gasket in accordance with the present invention;
Fig. 5 is an explanatory plan view illustrating meshes of a metal wire net of the reinforcing member;
Fig. 6 is an explanatory perspective view of a superposed assembly in the process of manufacturing the cylindrical gasket in accordance with the present invention;
Fig. 7 is an explanatory plan view of a tubular base member in the process of manufacturing the cylindrical gasket in accordance with the present invention;
Fig. 8 is an explanatory cross-sectional view, taken in the direction of arrows along line VIII - VIII, of the tubular base member shown in Fig. 7;
Fig. 9 is an explanatory cross-sectional view illustrating a state in which the tubular base member is inserted in a die in the process of manufacturing the cylindrical gasket in accordance with the present invention;
Fig. 10 is a diagram explaining a first method of forming a composite sheet in the process of manufacturing the cylindrical gasket in accordance with the present invention;
Fig. 11 is an explanatory cross-sectional view of a state in which the heat-resistant material made from the expanded graphite sheet is disposed in the reinforcing member formed in a flattened state by inserting the heat-resistant material made from the expanded graphite sheet into the reinforcing member made from a cylindrical knitted metal wire net and by deforming the reinforcing member into a flattened state shown in Fig. 10;
Fig. 12 is an explanatory cross-sectional view of the composite sheet manufactured by undergoing the manufacturing process shown in Fig. 10;
Fig. 13 a diagram explaining a second method of forming a composite sheet in the process of manufacturing the cylindrical gasket in accordance with the present invention;
Fig. 14 a diagram explaining the second method of forming a composite sheet in the process of manufacturing the cylindrical gasket in accordance with the present invention;
Fig. 15 is an explanatory plan view of the tubular base member in the process of manufacturing the cylindrical gasket in accordance with the present invention;
Fig. 16 is an explanatory cross-sectional view, taken in the direction of arrows along line XVI - XVI, of the tubular base member shown in Fig. 15;
Fig. 17 is an explanatory vertical cross-sectional view of an insertion-type exhaust pipe joint incorporating one example of the cylindrical gasket in accordance with the present invention;
Fig. 18 is an explanatory perspective view of an inner pipe of the insertion-type exhaust pipe joint;
Fig. 19 is an explanatory perspective view of an outer pipe of the insertion-type exhaust pipe joint; and
Fig. 20 is an explanatory perspective view of a tightening band of the insertion-type exhaust pipe joint.

### MODE FOR CARRYING OUT THE INVENTION

Next, a more description will be given of the present invention and a mode for carrying it out on the basis of the preferred embodiments illustrated in the drawings. It should be noted that the present invention is not limited to these embodiments.

A description will be given of constituent materials of a cylindrical gasket and a method of manufacturing the cylindrical gasket in accordance with the invention.

### <Concerning Heat-Resistant Material and Manufacturing Method Thereof>

While concentrated sulfuric acid of a 98% concentration is being agitated, a 60% aqueous solution of hydrogen peroxide is added to it as an oxidizing agent, and this solution is used as a reaction solution. This reaction solution is cooled and kept at a temperature of 10°C, natural flake graphite powder having a particle size of 30 to 80 meshes is added to the reaction solution, and reaction is allowed to take place for 30 minutes. After the reaction, acid-treated graphite powder is separated by suction filtration, and a cleaning operation is repeated twice in which the acid-treated graphite powder is agitated in water for 10 minutes and is then subjected to suction filtration, thereby sufficiently removing the sulfuric acid content from the acid-treated graphite powder. Then, the acid-treated graphite powder with the sulfuric acid content sufficiently removed is dried for 3 hours in a drying furnace held at a temperature of 110°C, and this is used as an acid-treated graphite powder.

The above-described acid-treated graphite powder is subjected to heating (expansion) treatment for 1 to 10 seconds at temperatures of 950 to 1200°C to produce cracked gas. The gaps between graphite layers are expanded by its gas pressure to form expanded graphite particles (expansion rate: 240 to 300 times). These expanded graphite particles are fed to a twin roller apparatus adjusted to a desired roll nip and is subjected to roll forming, thereby fabricating an expanded graphite sheet having a desired thickness. This expanded graphite sheet is used as a heat-resistant material.

As the heat-resistant material, a sheet material having a density of 1.0 to 1.15 Mg/m³ or thereabouts and a thickness of 0.3 to 0.6 mm or thereabouts is preferably used.

### <Concerning Reinforcing Member>

As a reinforcing member, a woven or knitted metal wire net is used which is formed by weaving or knitting one or more fine metal wires including, as an iron-based wire, a stainless steel wire made of such as austenitic stainless steels SUS 304, SUS 310S, and SUS 316, a ferritic stainless steel SUS 430, or an iron wire (JISG3532) or a galvanized steel wire (JISG3547), or, as a copper wire, a wire member made of a copper-nickel alloy (cupro-nickel) wire, a copper-nickel-zinc alloy (nickel silver) wire, a brass wire, or a beryllium copper wire.

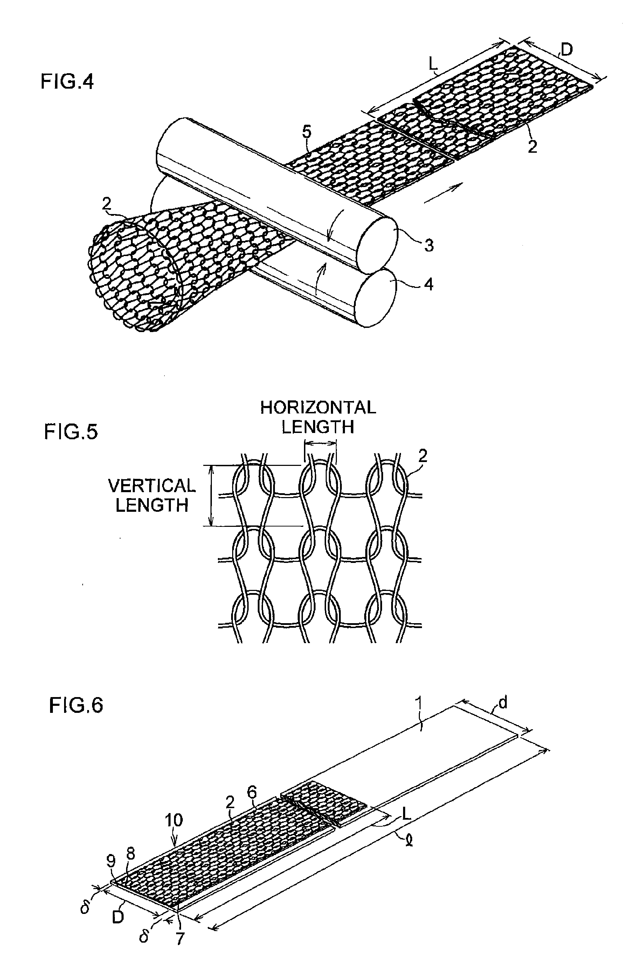

As the fine metal wire for forming the metal wire net, a fine metal wire whose diameter is 0.20 to 0.32 mm or thereabouts is used. In terms of the mesh size of the metal wire net (see Fig. 5 illustrating a woven metal wire net) for a reinforcing member net formed by the fine metal wire of that diameter, a mesh size of 2.5 to 6 mm long and 1.5 to 5 mm wide or thereabouts is suitably used.

Next, referring to the drawings, a description will be given of a method of manufacturing a cylindrical gasket which is constituted of the above-described constituent materials.

### <First Method of Manufacturing a Cylindrical Gasket>

### (First Process)

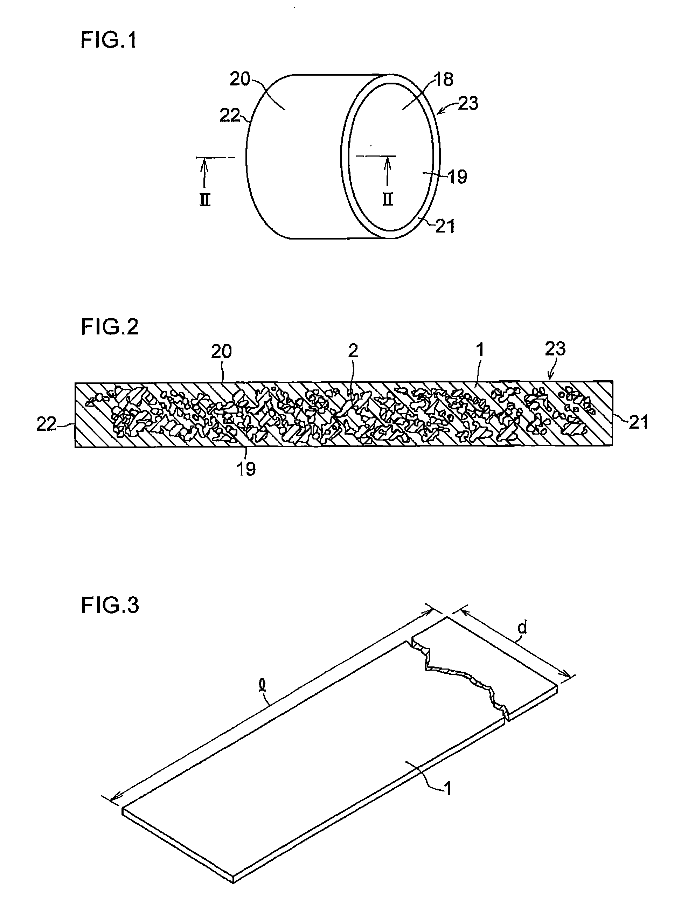

A heat-resistant material 1 is prepared which is constituted by an expanded graphite sheet having a density of 1.0 to 1.15 Mg/m³, a thickness of 0.3 to 0.6 mm, a width of d, and a length of 1 (see Fig. 3).

### (Second Process)

As shown in Fig. 4, a reinforcing member 2 made from a hollow cylindrical knitted metal wire net, which is obtained by continuously knitting a fine metal wire with a diameter of 0.20 to 0.32 mm by a knitting machine (not shown) and whose mesh size is 2.5 to 6 mm long and 1.5 to 5 mm wide or thereabouts (see Fig. 5), is passed between a pair of rollers 3 and 4, to thereby fabricate a belt-shaped metal wire net 5 having a predetermined width D (D < d). This belt-shaped metal wire net 5 is cut into a predetermined length L (L < 1), thereby preparing the reinforcing member 2.

### (Third Process)

As shown in Fig. 6, to ensure that the heat-resistant material 1 is exposed on a cylindrical inner peripheral surface 19 and a cylindrical outer peripheral surface 20 as well as both annular end faces 21 and 22 in a below-described cylindrical gasket 23 (see Fig. 1) by superposing the heat-resistant material 1 and the reinforcing member 2 with a lengthwise end 8 of the reinforcing member 2 and a lengthwise end 9 of the heat-resistant material 1 corresponding to that end 8 aligned with each other, a superposed assembly 10 is fabricated in which both widthwise ends 6 and 7 of the reinforcing member 2 and both widthwise ends of the heat-resistant material 1, which serve as the both end faces 21 and 22 of the cylindrical gasket 23, are made flush with each other, or a superposed assembly 10 is fabricated in which, as shown in Fig. 6, the heat-resistant material 1 projects in the widthwise direction by an amount of widthwise projection, δ (2δ + D = d), from the both widthwise ends 6 and 7 of the reinforcing member 2, which serve as the both end faces 21 and 22 of the cylindrical gasket 23.

### (Fourth Process)

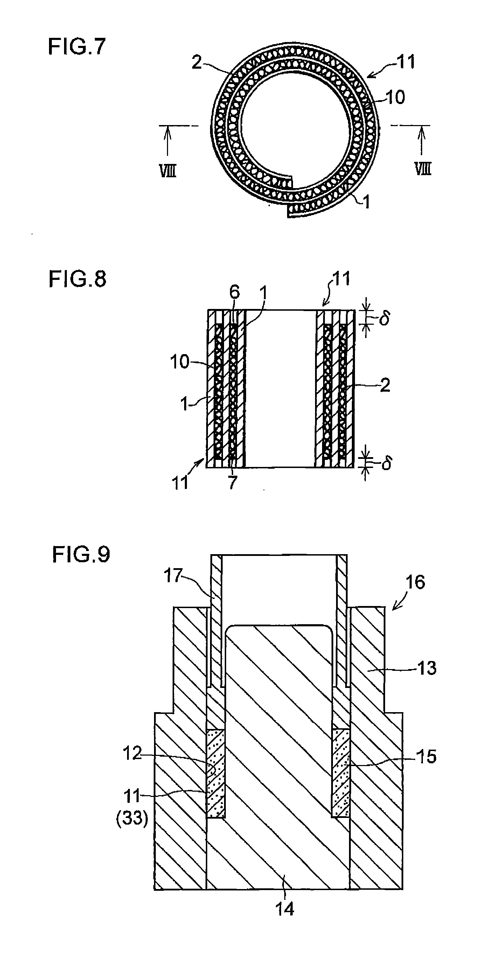

As shown in Figs. 7 and 8, the superposed assembly 10 is convoluted with the heat-resistant material 1 placed on the inner side such that the heat-resistant material 1 is convoluted with one more turn, thereby forming a tubular base member 11 in which the heat-resistant material 1 is exposed on both the inner peripheral side and the outer peripheral side. As the heat-resistant material 1, one is prepared in advance which has a length 1 of from (1.3 x L) mm to (1.5 x L) mm with respect to the length L of the reinforcing member 2 so that the number of winding turns of the heat-resistant material 1 in the tubular base member 11 becomes greater than the number of winding turns of the reinforcing member 2. In the tubular base member 11, as shown in Fig. 8, the heat-resistant material 1 on its one axial end side projects in the axial direction by δ from the one end 6 of the reinforcing member 2, and the heat-resistant material 1 on its other axial end side projects in the axial direction by δ from the other end 7 of the reinforcing member 2.

### (Fifth Process)

A die 16 such as the one shown in Fig. 9 is prepared in the interior of which a hollow cylindrical portion 15 is formed as a stepped core 14 is fittingly inserted in a through hole 12 of a cavity 13 having the through hole 12 in its interior. The tubular base member 11 is then fitted over the stepped core 14 of the die 16.

The tubular base member 11 disposed in the hollow cylindrical portion 15 of the die 16 is subjected to compression forming by a punch 17 under a pressure of 98 to 294 N/mm² (1 to 3 tons/cm²) in the direction of the core axis. Thus, the cylindrical gasket 23 is fabricated which includes the cylindrical inner peripheral surface 19 defining a through hole 18, the cylindrical outer peripheral surface 20, and the annular end faces 21 and 22, as shown in Figs. 1 and 2.

In the cylindrical gasket 23 fabricated by the compression forming of the tubular base member 11, the heat-resistant material 1 made from the expanded graphite and the reinforcing member 2 made from the metal wire net are provided with structural integrity by being compressed and intertwined with each other. The inner peripheral surface 19, the outer peripheral surface 20, and the end faces 21 and 22 of the cylindrical gasket 23 are each formed by a surface constituted of the heat-resistant material 1, and in the cylindrical gasket 23, the density of the heat-resistant material 1 is in the range of 1.21 to 1.58 Mg/m³, and the mass of the reinforcing member 2 occupies 50 to 80% of the total mass of the cylindrical gasket 23.

### <Second Method of Manufacturing a Cylindrical Gasket>

### (First Process)

In the same way as the above-described first manufacturing method, a heat-resistant material 1 is prepared which is constituted by an expanded graphite sheet having a density of 1.0 to 1.15 Mg/m³ and a thickness of 0.3 to 0.6 mm (see Fig. 3).

### (Second Process)

### <First Method of Fabricating a Composite Sheet>

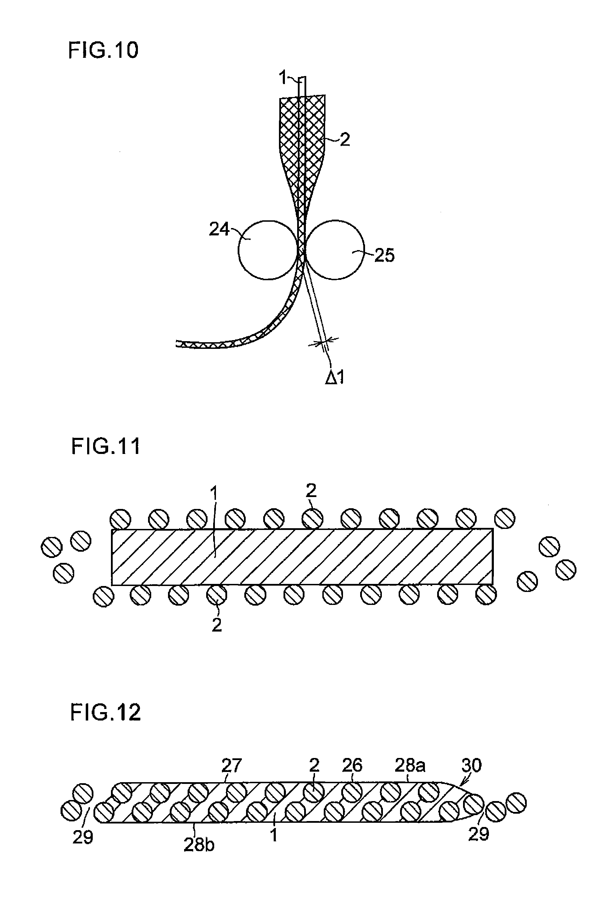

In the same way as the above-described heat-resistant material 1, a heat-resistant material 1 having a width d smaller than the diameter of the reinforcing member 2 is continuously inserted (see Figs. 10 and 11) into the interior between two layers formed by the metal wire net of the reinforcing member 2 made from a hollow cylindrical knitted metal wire net, which is obtained by continuously knitting a fine metal wire with a diameter of 0.20 to 0.32 mm by a knitting machine (not shown) and whose mesh size is 2.5 to 6 mm long and 1.5 to 5 mm wide or thereabouts (see Fig. 5). The reinforcing member 2 having the inserted heat-resistant material 1 between the two layers formed by the metal wire net is fed, starting with its insertion start end side, into a nip Δ1 between a pair of cylindrical rollers 24 and 25 each having a smooth cylindrical outer peripheral surface, so as to be pressurized in the thicknesswise direction of the heat-resistant material 1 and integrate the reinforcing member 2 and the heat-resistant material 1 such that the heat-resistant material 1 is filled in the meshes of the metal wire net of the reinforcing member 2. Thus, a flattened composite sheet 30 (see Fig. 12) is fabricated which has both surfaces 28a and 28b where a surface 26 constituted of the reinforcing member 2 and a surface 27 constituted of the heat-resistant material 1 are exposed in mixed form, as well as portions 29 where the heat-resistant material 1 is not filled on both widthwise sides of the reinforcing member 2.

### <Second Method of Fabricating a Composite Sheet>

As shown in Fig. 4, a reinforcing member 2 made from a hollow cylindrical knitted metal wire net, which is formed by knitting a fine metal wire with a diameter of 0.20 to 0.32 mm into a cylindrical shape and whose mesh size is 2.5 to 6 mm long and 1.5 to 5 mm wide or thereabouts (see Fig. 5), is passed between the rollers 3 and 4, to thereby fabricate a belt-shaped metal wire net 5 of a predetermined width. This belt-shaped metal wire net 5 is cut into a predetermined length, thereby preparing the reinforcing member 2.

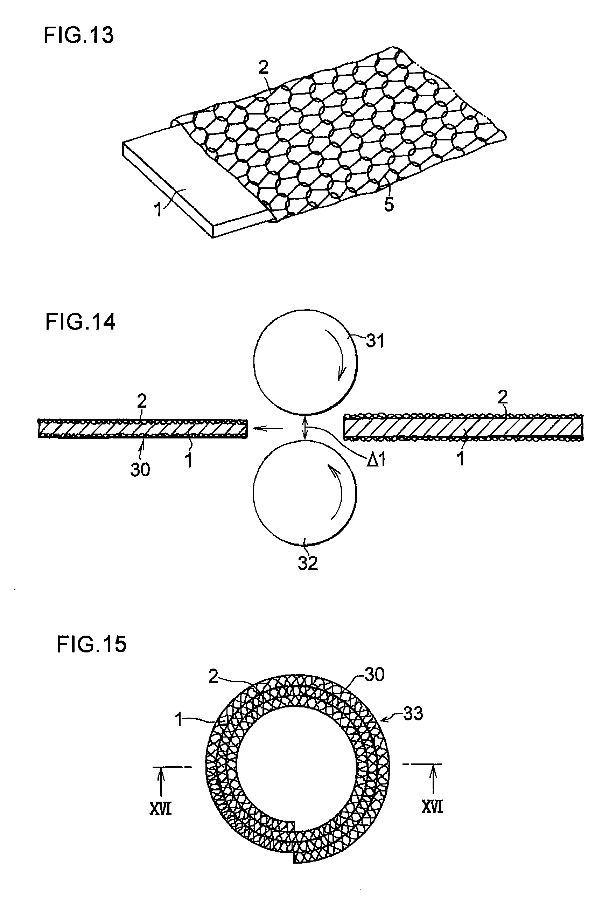

As shown in Fig. 13, a heat-resistant material 1 having a width d smaller than the width D of the reinforcing member 2 is inserted into the interior between two layers formed by the metal wire net of the reinforcing member 2 made from the belt-shaped metal wire net 5, and, as shown in Fig. 14, the reinforcing member 2 having the heat-resistant material 1 between the two layers formed by the metal wire net is fed into a nip Δ1 between rollers 31 and 32, so as to be pressurized in the thicknesswise direction of the heat-resistant material 1 and integrate the reinforcing member 2 and the heat-resistant material 1 such that the heat-resistant material 1 is filled in the meshes of the metal wire net of the reinforcing member 2. Thus, a flattened composite sheet 30 (see Fig. 12) is fabricated which has both surfaces 28a and 28b where a surface 26 constituted of the reinforcing member 2 and a surface 27 constituted of the heat-resistant material 1 are exposed in mixed form, as well as portions 29 where the heat-resistant material 1 is not filled on both widthwise sides of the reinforcing member 2.

In the above-described first and second fabricating methods, the nip Δ1 between the pair of cylindrical rollers 24 and 25 and the pair of rollers 31 and 32 is appropriately 0.4 to 0.6 mm or thereabouts.

The reinforcing member 2 which is made from the metal wire net in this composite sheet 30 provides the amount of the reinforcing member 2 occupied in the final cylindrical gasket, and is adjusted by the mesh size of the metal wire net of the reinforcing member 2, the diameter of the fine metal wire forming the metal wire net, and the metal wire net which is formed by one-wire knitting or two-wire knitting of the fine metal wire.

### (Third Process)

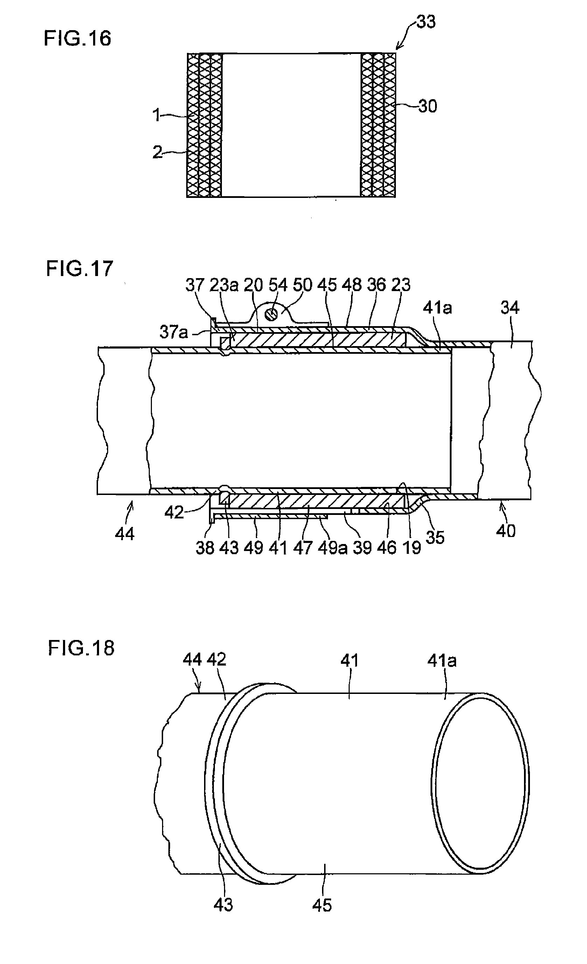

A tubular base member 33 is fabricated by convoluting the flattened composite sheet 30 around a cylindrical core by a three-circumference portion (see Figs. 15 and 16).

### (Fourth Process)

A die 16 similar to that of the above-described first method is prepared, and the tubular base member 33 is fitted over the stepped core 14 of the die 16.

The tubular base member 33 disposed in the hollow cylindrical portion 15 of the die 16 is subjected to compression forming by the punch 17 under a pressure of 98 to 294 N/mm² (1 to 3 tons/cm²) in the direction of the core axis. Thus, the cylindrical gasket 23 is fabricated which includes the cylindrical inner peripheral surface 19 defining the through hole 18, the cylindrical outer peripheral surface 20, and the annular end faces 21 and 22, as shown in Fig. 1.

In the cylindrical gasket 23 fabricated by the compression forming of the tubular base member 33, the heat-resistant material 1 made from the expanded graphite and the reinforcing member 2 made from the metal wire net are provided with structural integrity by being compressed and intertwined with each other. The cylindrical inner peripheral surface 19, the cylindrical outer peripheral surface 20, and the axial annular end faces 21 and 22 which are exposed on the cylindrical gasket 23 are each formed by a surface where a surface constituted of the heat-resistant material 1 and a surface constituted of the reinforcing member 2 are present in mixed form, and in the cylindrical gasket 23, the density of the heat-resistant material 1 is in the range of 1.21 to 1.58 Mg/m³, and the mass of the reinforcing member 2 occupies 50 to 80% of the total mass of the cylindrical gasket 23.

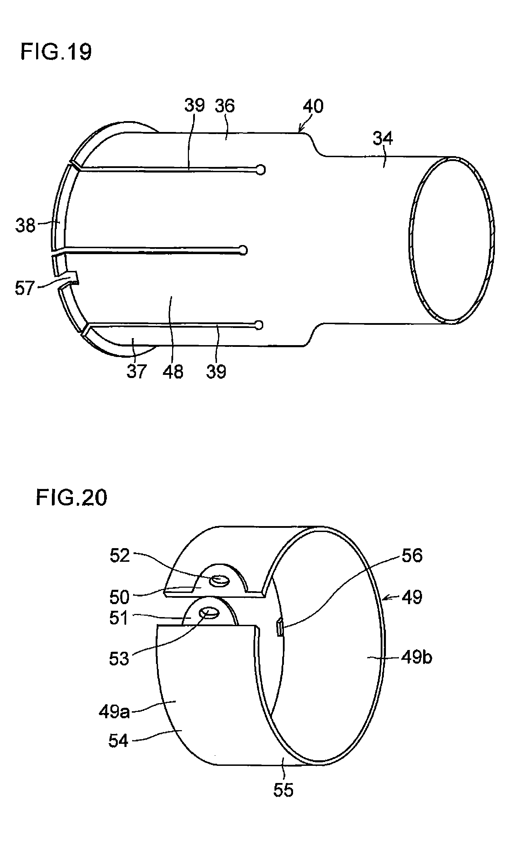

The cylindrical gasket 23 which exhibits the above-described properties is used by being incorporated in an insertion-type exhaust pipe joint shown in Fig. 17. Namely, the insertion-type exhaust pipe joint shown in Fig. 17 includes an outer pipe 40 (see Figs. 17 and 19) having a pipe end portion 34, an enlarged-diameter cylindrical portion 36 provided with an enlarged diameter at the pipe end portion 34 via a tapered annular shoulder portion 35, an open end portion 37 provided at one axial end portion of the enlarged-diameter cylindrical portion 36, a flange portion 38 provided on an outer peripheral surface of the open end portion 37 in such a manner as to extend radially outwardly, and a plurality of slits 39 provided in the enlarged-diameter cylindrical portion 36 and in the flange portion 38 in such a manner as to extend axially from an annular end face 37a of the open end portion 37 and to be arranged equidistantly in the circumferential direction; an inner pipe 44 (see Figs. 17 and 18) having a pipe end portion 41 which is passed through the interior of the enlarged-diameter cylindrical portion 36 of the outer pipe 40 and is fitted at its one axial end portion 41a to the pipe end portion 34 of the outer pipe 40, and a flange 43 which is provided uprightly on a cylindrical outer surface of another axial end portion 42 of the pipe end portion 41; the above-described cylindrical gasket 23 which is fitted in an annular gap 47 between a cylindrical outer surface 45 of the pipe end portion 41 of the inner pipe 44 and a cylindrical inner surface 46 of the enlarged-diameter cylindrical portion 36 of the outer pipe 40; and a tightening band 49 (see Fig. 20) which is disposed on a cylindrical outer surface 48 of the enlarged-diameter cylindrical portion 36. The tightening band 49 is so adapted that as its cylindrical main body 49a is made to undergo a reduction in diameter by the tightening of a tightening tool 54 such as a bolt which is inserted into through holes 52 and 53 of a pair of lugs 50 and 51 provided in such a manner as to integrally project radially outwardly from the cylindrical main body 49a, the tightening band 49 presses the cylindrical inner surface 46 of the enlarged-diameter cylindrical portion 36 of the outer pipe 40 against the cylindrical outer peripheral surface 20 of the cylindrical gasket 23 by means of an inner peripheral surface 49b of the cylindrical main body 49a, and through this pressing the tightening band 49 presses the cylindrical inner peripheral surface 19 of the cylindrical gasket 23 against the cylindrical outer surface 45 of the pipe end portion 41 of the inner pipe 44. The cylindrical gasket 23 in the annular gap 47 is disposed with the end face 22 of its one axial end portion 23a abutting against the flange 43 of the inner pipe 44, and thus the cylindrical gasket 23 is adapted to hermetically seal the annular gap 47 between the inner pipe 44 and the outer pipe 40 to thereby prevent the leakage of exhaust gases from that annular gap 47.

In the above-described insertion-type exhaust pipe joint, a hook portion 56 projecting radially inwardly is provided at one end portion 54 of the axial end portions 54 and 55 of the tightening band 49. The hook portion 56 has a cross section similar to that of a notched portion 57 formed in the flange portion 38 of the enlarged-diameter cylindrical portion 36 of the outer pipe 40, and when the tightening band 49 is fitted on the outer peripheral surface 48 of the enlarged-diameter cylindrical portion 36 of the outer pipe 40, the hook portion 56 freely passes through the notched portion 57 formed in the flange portion 38, and is brought into contact at its inner surface with an axial side surface of the flange 43 of the inner pipe 44 and engages the flange 43 of the inner pipe 44, so that the outer pipe 40 at its flange portion 38 axially engages the tightening band 49. As a result, even if a force which tends to separate the inner pipe 44 and the outer pipe 40 in the axial direction, the inner pipe 44 and the outer pipe 40 are prevented from becoming disengaged from each other in the axial direction.

It should be noted that, in the present invention, with the cylindrical gasket 23 whose rigidity has been enhanced, since such defects as the permanent set are not produced even by a large tightening force exerted by the tightening band 49, the hook portion 56 formed on the tightening band 49 and the notched portion 57 formed in the flange portion 38 of the outer pipe 40 may not necessarily be provided.

### EXAMPLES

Next, the present invention will be described in detail in accordance with examples. It should be noted that the present invention is not limited to these examples.

### Example 1

A heat-resistant material constituted by an expanded graphite sheet having a density of 1.0 Mg/m³ and a thickness of 0.4 mm was prepared.

By using one austenitic stainless steel wire (SUS 304) having a wire diameter of 0.28 mm as a fine metal wire, a cylindrical knitted metal wire net whose mesh size was 2 mm long and 2.5 mm wide or thereabouts was fabricated and was passed between a pair of rollers to form a belt-shaped metal wire net, and this metal wire net was used as the reinforcing member.

A superposed assembly was fabricated in which the heat-resistant material and the reinforcing member were superposed on each other such that the heat-resistant material projected in the widthwise direction from both widthwise ends of the reinforcing member, which serve as annular end faces of the cylindrical gasket, and such that one lengthwise end of the reinforcing member and a lengthwise end of the heat-resistant material corresponding to that one end were aligned.

The superposed assembly was convoluted around the outer peripheral surface of a cylindrical core with the heat-resistant material placed on the inner side such that the heat-resistant material was convoluted with one more turn, thereby fabricating tubular base member in which the heat-resistant material was exposed on both the inner peripheral side and the outer peripheral side. In this tubular base member, both axial end portions of the heat-resistant material respectively projected from the reinforcing member in the axial direction thereof.

The die shown in Fig. 9 was prepared in the interior of which the hollow cylindrical portion was formed as the stepped core was fittingly inserted in the through hole of the cavity having the through hole in its interior. The tubular base member was then fitted over the stepped core of the die.

The tubular base member disposed in the hollow cylindrical portion of the die was subjected to compression forming under a pressure of 196 N/mm² (2 tons/cm²) in the direction of the core axis. Thus, a cylindrical gasket was fabricated which included the cylindrical inner peripheral surface defining the through hole, the cylindrical outer peripheral surface, and the annular end faces. In this cylindrical gasket, the density of the heat-resistant material was 1.21 Mg/m³, and the mass of the reinforcing member occupied 60% of the mass of the cylindrical gasket.

### Example 2

A heat-resistant material constituted by an expanded graphite sheet having a density of 1.0 Mg/m³ and a thickness of 0.4 mm was prepared.

By using one austenitic stainless steel wire having a wire diameter of 0.28 mm as a fine metal wire, a cylindrical knitted metal wire net whose mesh size was 4 mm long and 5 mm wide was fabricated and was passed between a pair of rollers to form a belt-shaped metal wire net, and this metal wire net was used as the reinforcing member.

In a method similar to that of Example 1, a cylindrical gasket was fabricated which included the cylindrical inner peripheral surface defining the through hole, the cylindrical outer peripheral surface, and the annular end faces. In this cylindrical gasket, the density of the heat-resistant material was 1.23 Mg/m³, and the mass of the reinforcing member occupied 58% of the mass of the cylindrical gasket.

### Example 3

A heat-resistant material constituted by an expanded graphite sheet having a density of 1.15 Mg/m³ and a thickness of 0.4 mm was prepared.

A reinforcing member similar to that of Example 1 was used as the reinforcing member.

Thereafter, a cylindrical gasket was fabricated in a method similar to that of Example 1. In this cylindrical gasket, the density of the heat-resistant material was 1.30 Mg/m³, and the mass of the reinforcing member occupied 63% of the mass of the cylindrical gasket.

### Example 4

As the heat-resistant material, a heat-resistant material similar to that of Example 3 and constituted by an expanded graphite sheet having the density of 1.15 Mg/m³ and the thickness of 0.4 mm was prepared.

The heat-resistant material was continuously inserted into the interior of the reinforcing member made from a hollow cylindrical knitted metal wire net which was obtained by using one austenitic stainless steel wire having a wire diameter of 0.28 mm as a fine metal wire and whose mesh size was 4 mm long and 5 mm wide. The reinforcing member having the heat-resistant material inserted therein was fed, starting with its insertion start end side, into a nip (0.5 mm) between a pair of cylindrical rollers each having a smooth cylindrical outer peripheral surface, so as to be pressurized in the thicknesswise direction of the heat-resistant material and integrate the heat-resistant material made from the expanded graphite sheet and the reinforcing member made from the hollow cylindrical knitted metal wire net, such that the heat-resistant material was filled in the meshes of the metal wire net of the reinforcing member. Thus, a flattened composite sheet was fabricated which had both surfaces where a surface constituted of the reinforcing member and a surface constituted of the heat-resistant material were exposed in mixed form, as well as portions where the heat-resistant material was not filled on both widthwise sides of the reinforcing member.

Thereafter, a cylindrical gasket was fabricated in a method similar to that of Example 1 described above. In this cylindrical gasket, the density of the heat-resistant material was 1.42 Mg/m³, and the mass of the reinforcing member occupied 75% of the mass of the cylindrical gasket.

### Example 5

A heat-resistant material constituted by an expanded graphite sheet having a density of 1.15 Mg/m³ and a thickness of 0.4 mm was prepared.

The heat-resistant material was continuously inserted into the interior of the reinforcing member made from a hollow cylindrical knitted metal wire net obtained by using two austenitic stainless steel wires (SUS 304) having a wire diameter of 0.28 mm as a fine metal wire. The reinforcing member having the heat-resistant material inserted therein was fed, starting with its insertion start end side, into a nip (0.45 mm) between a pair of cylindrical rollers each having a smooth cylindrical outer peripheral surface, so as to be pressurized in the thicknesswise direction of the heat-resistant material and integrate the reinforcing member and the heat-resistant material, such that the heat-resistant material was filled in the meshes of the metal wire net of the reinforcing member. Thus, a flattened composite sheet was fabricated which had both surfaces where a surface constituted of the reinforcing member and a surface constituted of the heat-resistant material were exposed in mixed form, as well as portions where the heat-resistant material was not filled on both widthwise sides of the reinforcing member.

Thereafter, a cylindrical gasket was fabricated in a method similar to that of Example 1 described above. In this cylindrical gasket, the density of the heat-resistant material was 1.52 Mg/m³, and the mass of the reinforcing member occupied 80% of the mass of the cylindrical gasket.

### Comparative Example 1

A heat-resistant material constituted by an expanded graphite sheet having a density of 1.0 Mg/m³ and a thickness of 0.4 mm was prepared.

A hollow cylindrical knitted metal wire net, which was obtained by continuously knitting by a knitting machine (not shown) by using one austenitic stainless steel wire having a wire diameter of 0.15 mm as a fine metal wire and whose mesh size was 4 mm long and 3 mm wide or thereabouts, was passed between a pair of rollers, to thereby fabricate a belt-shaped metal wire net having a predetermined width. This belt-shaped metal wire net was cut into a predetermined length, thereby preparing the reinforcing member.

A superposed assembly was fabricated in which the heat-resistant material and the reinforcing member were superposed on each other such that the heat-resistant material projected in the widthwise direction from both widthwise ends of the reinforcing member, which serve as annular end faces of the cylindrical gasket, and such that one lengthwise end of the reinforcing member and a lengthwise end of the heat-resistant material corresponding to that one end were aligned.

The superposed assembly was convoluted around the outer peripheral surface of a cylindrical core with the heat-resistant material placed on the inner side such that the heat-resistant material was convoluted with one more turn, thereby fabricating a tubular base member in which the heat-resistant material was exposed on both the inner peripheral side and the outer peripheral side. In this tubular base member, both axial end portions of the heat-resistant material respectively projected from the reinforcing member in the axial direction thereof.

The die shown in Fig. 9 was prepared in the interior of which the hollow cylindrical portion was formed as the stepped core was fittingly inserted in the through hole of the cavity having the through hole. The tubular base member was then fitted over the stepped core of the die.

The tubular base member disposed in the hollow cylindrical portion of the die was subjected to compression forming under a pressure of 196 N/mm² (2 tons/cm²) in the direction of the core axis. Thus, a cylindrical gasket was fabricated which included the cylindrical inner peripheral surface defining the through hole, the cylindrical outer peripheral surface, and the annular axial end faces. In this cylindrical gasket, the density of the heat-resistant material was 1.21 Mg/m³, and the mass of the reinforcing member occupied 41% (heat-resistant material: 59%) of the mass of the cylindrical gasket.

### Comparative Example 2

A heat-resistant material constituted by an expanded graphite sheet having a density of 1.15 Mg/m³ and a thickness of 0.4 mm was prepared.

A hollow cylindrical knitted metal wire net, which was obtained by continuously knitting by a knitting machine (not shown) by using one austenitic stainless steel wire having a wire diameter of 0.20 mm as a fine metal wire and whose mesh size was 4 mm long and 3 mm wide or thereabouts, was passed between a pair of rollers, to thereby fabricate a belt-shaped metal wire net having a predetermined width. This belt-shaped metal wire net was cut into a predetermined length, thereby preparing the reinforcing member.

Thereafter, a cylindrical gasket was fabricated by a method similar to that of Comparative Example 1. In this cylindrical gasket, the density of the heat-resistant material was 1.30 Mg/m³, and the mass of the reinforcing member occupied 42% of the mass of the cylindrical gasket.

Next, a description will be given of the results of a test conducted on the amount of gas leakage (l/min) and a rate of decline (%) of the tightening torque by the tightening band by incorporating each of the cylindrical gaskets obtained in Examples 1 to 5 and Comparative Examples 1 and 2 described above into the exhaust pipe spherical joint shown in Fig. 17.

### <Test Conditions of Gas Leakage Amount and Test Method>

### <Test Conditions>

Tightening force by the tightening band: 12 N·m
Excitation angle: ±0.5° (with the inner pipe fixed)
Excitation frequency (oscillation velocity): 50 Hz
Temperature (outer surface temperature of the inner pipe 44 shown in Fig. 17) : from room temperature (25°C) to 500°C
Test time: 24 hours

### <Test Method>

The temperature was raised up to 500°C in 1 hour while continuing the oscillating motion at ±0.5° at an excitation frequency of 50 Hz at room temperature (25°C). The oscillating motion was continued at that temperature held for 22 hours, and after the lapse of 22 hours the temperature was lowered to room temperature in 1 hour. Measurement was made of the amount of gas leakage at room temperature (before the test start) and the amount of gas leakage after the lapse of the test time of 24 hours.

### <Measurement Method of Gas Leakage Amount>

An opening portion of the outer pipe 40 of the insertion-type exhaust pipe joint shown in Fig. 17 was closed, and dry air was allowed to flow in from the inner pipe 44 side under a pressure of 30 kPa. The amount of gas leakage from the joint portion (gap between the inner pipe 44 and the outer pipe 40) was measured by a flowmeter 2 times, i.e., (1) at an early period of the test (before the test start) and (2) after the lapse of the test of 24 hours.

Tables 1 and 2 show the results of the above-described test.

**[Table 1]**

| | | Examples | | | | |
|---|---|---|---|---|---|---|
| | | 1 | 2 | 3 | 4 | 5 |
| Density of heat-resistant material | | 1.21 | 1.23 | 1.30 | 1.42 | 1.52 |
| Ratio occupied by reinforcing member (%) | | 60 | 58 | 63 | 75 | 80 |
| Amount of gas leakage | (1) | 0.08 | 0.06 | 0.08 | 0.09 | 0.10 |
| | (2) | 0.46 | 0.44 | 0.48 | 0.50 | 0.52 |
| Rate of decline of tightening torque (%) | | 13.4 | 14.2 | 12.2 | 10.2 | 8.3 |

**[Table 2]**

| | | Comparative Examples | |
|---|---|---|---|
| | | 1 | 2 |
| Density of heat-resistant material | | 1.21 | 1.30 |
| Ratio occupied by reinforcing member (%) | | 41 | 42 |
| Amount of gas leakage | (1) | 0.09 | 0.08 |
| | (2) | 9.26 | 9.14 |
| Rate of decline of tightening torque (%) | | 46 | 48 |

From the test results shown in Tables 1 and 2, it can be appreciated that the cylindrical gaskets in accordance with Examples 1 to 5 are superior to the cylindrical gaskets in accordance with Comparative Examples 1 and 2 in terms of the amount of gas leakage and the rate of decline of the tightening torque. It was confirmed that an increase in the amount of gas leakage of the cylindrical gaskets in accordance with Comparative Examples was ascribable to a substantial decline in the tightening force of the tightening band due to such as the permanent set and stress relaxation of the cylindrical gaskets.

As described above, since the density of the heat-resistant material constituted by expanded graphite is in the range of 1.21 to 1.58 Mg/m³ and the mass of the reinforcing member made from the metal wire net occupies 50 to 80% of the mass of the cylindrical gasket, the cylindrical gasket in accordance with the present invention has both pliability contributing to sealability and rigidity for receiving the tightening force exerted by the tightening band. Thus, this cylindrical gasket, when incorporated in the insertion-type exhaust pipe joint and tightened firmly by the tightening band, does not produce such defects as the permanent set, and even when, due to traveling on a rough road, the joint portion is repeatedly subjected to vibrational load and bending torque, and prying repeatedly occurs between the inner and outer pipes, the cylindrical gasket is able to prevent gas leakage from the joint portion of the exhaust pipe as practically as possible.

### DESCRIPTION OF REFERENCE NUMERALS

- 1:: heat-resistant material
- 2:: reinforcing member
- 5:: belt-shaped metal wire net
- 10:: superposed assembly
- 11, 33:: tubular base member
- 13:: cavity
- 14:: stepped core
- 15:: hollow cylindrical portion
- 16:: die
- 17:: punch
- 23:: cylindrical gasket

## Claims

1. A cylindrical gasket for use in an insertion-type exhaust pipe joint, comprising: a reinforcing member made from a metal wire net and compressed and a heat-resistant material made from expanded graphite compressed and filling meshes of the metal wire net of said reinforcing member, wherein said reinforcing member and said heat-resistant material are intertwined with each other so as to be provided with structural integrity, the density of said heat-resistant material is in a range of 1.21 to 1.58 Mg/m³, and the mass of said reinforcing member occupies 50 to 80% of a total mass.

2. The cylindrical gasket for use in an insertion-type exhaust pipe joint according to claim 1, wherein an inner peripheral surface, an outer peripheral surface, and both end faces are each formed by a surface constituted of said heat-resistant material.

3. The cylindrical gasket for use in an insertion-type exhaust pipe joint according to claim 1, wherein an inner peripheral surface, an outer peripheral surface, and both end faces are each formed by a surface where a surface constituted of said heat-resistant material and a surface constituted of said reinforcing member are present in mixed form.

4. A method of manufacturing a cylindrical gasket for use in an insertion-type exhaust pipe joint, comprising the steps of:
(1) preparing a heat-resistant material constituted by an expanded graphite sheet having a density of 1.0 to 1.15 Mg/m³ and a thickness of 0.3 to 0.6 mm;
(2) preparing a reinforcing member made from a metal wire net which is obtained by weaving or knitting a fine metal wire, and fabricating a superposed assembly in which said heat-resistant material and said reinforcing member are superposed on each other such that one lengthwise end of said reinforcing member and a lengthwise end of said heat-resistant material corresponding to that one end are aligned;
(3) convoluting the superposed assembly around an outer peripheral surface of a cylindrical core with said heat-resistant material placed on an inner side such that said heat-resistant material is convoluted with one more turn, to thereby fabricate a tubular base member in which said heat-resistant material is exposed on both an inner peripheral side and an outer peripheral side; and
(4) inserting said tubular base member into a cylindrical hollow portion of a die, and subjecting said tubular base member to compression forming in the die in an axial direction thereof,
said cylindrical gasket including said reinforcing member made from the metal wire net and compressed and said heat-resistant material made from the expanded graphite compressed and filling meshes of the metal wire net of said reinforcing member, wherein said reinforcing member and said heat-resistant material are intertwined with each other so as to be provided with structural integrity, an inner peripheral surface, an outer peripheral surface, and both end faces are each formed by a surface constituted of said heat-resistant material, the density of said heat-resistant material is in a range of 1.21 to 1.58 Mg/m³, and the mass of said reinforcing member occupies 50 to 80% of a total mass.

5. A method of manufacturing a cylindrical gasket for use in an insertion-type exhaust pipe joint, comprising the steps of:
(1) preparing a heat-resistant material constituted by an expanded graphite sheet having a density of 1.0 to 1.15 Mg/m³ and a thickness of 0.3 to 0.6 mm;
(2) inserting said heat-resistant material between two layers of a reinforcing member made from a metal wire net which is obtained by weaving or knitting a fine metal wire, and feeding said reinforcing member having said inserted heat-resistant material between the two layers into a nip between a pair of rollers so as to be pressurized and to fill said heat-resistant material in meshes of the metal wire net of said reinforcing member, to thereby form a flattened composite sheet which has both surfaces where a surface constituted of said reinforcing member and a surface constituted of said heat-resistant material are exposed in mixed form and portions where said heat-resistant material is not filled on both widthwise sides of said reinforcing member;
(3) convoluting the flattened composite sheet around a core with at least three turns to thereby form a tubular base member; and
(4) inserting said tubular base member into a cylindrical hollow portion of a die, and subjecting said tubular base member to compression forming in the die in an axial direction thereof,
said cylindrical gasket including said reinforcing member made from the metal wire net and compressed and said heat-resistant material made from the expanded graphite compressed and filling meshes of the metal wire net of said reinforcing member, wherein said reinforcing member and said heat-resistant material are intertwined with each other so as to be provided with structural integrity, an inner peripheral surface, an outer peripheral surface, and both end faces are each formed by a surface where a surface constituted of said heat-resistant material and a surface constituted of said reinforcing member are present in mixed form, the density of said heat-resistant material is in a range of 1.21 to 1.58 Mg/m³, and the mass of said reinforcing member occupies 50 to 80% of a total mass.

6. An insertion-type exhaust pipe joint comprising: an outer pipe having a pipe end portion, an enlarged-diameter cylindrical portion provided with an enlarged diameter via an annular shoulder portion, an open end portion provided at one axial end portion of the enlarged-diameter cylindrical portion, a flange portion provided on an outer peripheral surface of the open end portion in such a manner as to extend radially outwardly, and a plurality of slits provided in the enlarged-diameter cylindrical portion and in the flange portion in such a manner as to extend axially from an annular end face of the open end portion and to be arranged equidistantly in a circumferential direction; an inner pipe having a pipe end portion which is passed through an interior of the enlarged-diameter cylindrical portion of said outer pipe and is fitted at its one end portion to the pipe end portion of said outer pipe, and a flange which is provided uprightly on an outer peripheral surface of another end portion of the pipe end portion; said cylindrical gasket according to any one of claims 1 to 3 which is fitted in an annular gap between a cylindrical outer surface of the pipe end portion of said inner pipe and a cylindrical inner surface of the enlarged-diameter cylindrical portion of said outer pipe; and a tightening band which is disposed on a cylindrical outer surface of the enlarged-diameter cylindrical portion of said outer pipe so as to press the cylindrical inner surface of the pipe end portion of said outer pipe against the cylindrical outer peripheral surface of said cylindrical gasket by being tightened, through which pressing said tightening band presses the cylindrical inner peripheral surface of said cylindrical gasket against the cylindrical outer surface of the pipe end portion of said inner pipe, said cylindrical gasket in the annular gap being disposed with an annular end face of its one axial end portion abutting against the flange of said inner pipe.
